# EUROPEAN PATENT APPLICATION

(11) **EP 2 186 423 A1**
(43) Date of publication of application: **19.05.2010**
(21) Application number: 09175070.3
(22) Date of filing: 04.11.2009
(51) Int. Cl.: A23L 1/00, A23L 1/10, A23L 1/182, A23L 1/29, A23P 1/08

(54) **Coating solution, method and apparatus**

(30) Priority: 05.11.2008 JP 2008283866
(71) Applicant: Satake Corporation, Chiyoda-ku, Tokyo 101-0021 (JP)
(72) Inventor: Fukumori, Takeshi, Tokyo 101-0021 (JP); Kanemoto, Shigeharu, Tokyo 101-0021 (JP); Wakabayashi, Keishi, Tokyo 101-0021 (JP); Moritou, Shuji, Tokyo 101-0021 (JP); Maehara, Hiroyuki, Tokyo 101-0021 (JP)
(74) Representative: Gibbs, Christopher Stephen

(57) **Abstract**

There is provided a coating solution for rice grains, which can efficiently take in dietary fibre at high concentration and has a high viscosity for efficient coating. In the corresponding apparatus, even if the added amount is large compared to the amount of rice, a large amount of coated rice can be continuously manufactured without causing clogging in the flow of rice and the coating solution in the apparatus and the binding of rice.

The coating solution is added at a ratio of 6.0 to 8.0% by weight to rice. The coating solution is made of a water solution of a mixture of one or more kinds of soluble dietary fibre and one or more kinds of insoluble dietary fibre. The mixture is at a ratio of one part by weight of the soluble dietary fibre and 0.5 to 2 parts by weight of the insoluble dietary fibre. The dilution ratio of the mixture and water is 7 parts by weight of the mixture and 3 parts by weight of the water.

## Description

### BACKGROUND

The present invention relates to coating solutions that enable a large amount of dietary fibre to be coated onto the surface of cereal grains, in particular rice, and a corresponding manufacturing method and apparatus.

To provide products excellent in nutrition and taste, conventionally, coated rice with various effective ingredients coated onto its surface has been known. Japanese Patent Application Publication (JP-B) No. 06-026507 discloses a processed polished rice processing method wherein a water solution of one or more kinds of soluble dietary fibre selected from the group of decomposition substances such as guar gum, locust bean gum, tamarind gum, tara gum, pectin, and xanthan gum, and pullulan is sprayed onto the surface of polished rice subjected to a polishing process (a process for polishing unpolished rice) or a process for polishing polished rice (a process for polishing the surface of polished rice again) and is then dried. Japanese Patent Application Laid-Open (JP-A) No. 2003-169611 discloses a coated rice manufacturing method wherein at least any one of sugars such as starch syrup and a soluble polymer with cellulose as the main ingredient is added as the soluble dietary fibre at a ratio of 0.5 to 3% by weight to a raw material.

JP-B No. 06-026507 discloses an operation and effect in which when processed polished rice onto which the soluble dietary fibre is sprayed is boiled, the soluble dietary fibre is melted into water for rice boiling and enters into starch tissue at the completion of boiling to provide rice-specific viscosity, chewy properties, and gloss to the rice, thereby significantly improving the taste. JP-A No. 2003-169611 discloses an operation and effect in which when at least any two of sugars such as starch syrup and a soluble polymer with cellulose as the main ingredient are used so that glossy coated rice of excellent appearance can be obtained.

In the coated rice manufacturing method disclosed in JP-B No. 06-026507 and JP-A No. 2003-169611, the viscosity of the coating solution (water solution) sprayed and added to rice is 100 cP (centipoise) or below. This is a viscosity equal to that of tomato juice and salad oil in a 24°C environment. The coating solution is a non-viscous liquid coating solution. The coating solution needs be sprayed and dried several times to guild a stack of coating layers, so as to form a uniform coating on rice. The coating solution of the related art has not been suitable for continuously manufacturing a large amount of coated rice.

In view of the above problems, the present invention aims to provide a coating solution which can efficiently take in dietary fibre at high concentration, and a manufacturing method and apparatus for such a coating solution. The manufacturing method and the apparatus can continuously manufacture a large amount of coated rice without causing clogging in the flow of rice and the coating solution in the coated rice manufacturing apparatus and binding or aggregation of rice (the state that rice is bound together and becomes a lump due to the viscosity of the coating solution) even if the viscosity of the coating solution added to the surface of the rice is high and the added amount is large.

To address the above problems, the following means are adopted.

In a first aspect of the invention, a coating solution for rice is made of a aqueous solution of a mixture of one or more kinds of soluble dietary fibre and one or more kinds of insoluble dietary fibre, in a ratio of one part by weight of the soluble dietary fibre and 0.5 to 2 parts by weight of the insoluble dietary fibre, and the diluting ratio of the mixture and water is 7 parts by weight of the mixture and 3 parts by weight of the water.

When the mixture is diluted with water, hot water at a temperature of 40 to 80°C may be used for preparation. When the mixture and the water are diluted, the viscosity may be in the range of 320 to 1480 cP. The particle size of the insoluble dietary fibre may be 10 to 20 µm.

In a second aspect of the invention, a method of manufacturing a coating solution includes the steps of: using a raw material made of a mixture of one or more kinds of soluble dietary fibre and one or more kinds of insoluble dietary fibre and hot water; mixing one part by weight of the soluble dietary fibre to 0.5 to 2 parts by weight of the insoluble dietary fibre; diluting the mixture in the step with hot water at 40 to 80°C at a ratio of 7 parts by weight of the mixture and 3 parts by weight of the hot water; and thermally insulating and stirring the diluted mixture at a predetermined temperature so as to arrive at a viscosity in the range of 320 to 1480 cP.

In a third aspect, a manufacturing apparatus for the coating solution is arranged to dilute a mixture of one or more kinds of soluble dietary fibre and one or more kinds of insoluble dietary fibre by hot water to prepare the coating solution. The manufacturing apparatus has a preparation tank whose outside wall is covered by a thermal insulation jacket and includes a stirrer therein, a supply tank having the same configuration and the same volume as the preparing tank, a hot-water tank which circulates hot water in the thermal insulation jacket, and steam supplying means which heats water in the hot-water tank. The preparation tank at the upper stage and the supply tank at the lower stage are arranged in series so that the coating solution prepared by the preparation tank can be poured into the supply tank and be stored.

Embodiments of the invention exhibit the following effects.

In the invention according to the first aspect, the prepared coating solution has the same viscosity as that of a breaded pork cutlet sauce (a sauce poured on a fried pork cutlet of Japanese food) in a 24°C environment, castor oil in a 20°C environment, and honey or gum syrup in a 21°C environment. The viscosity of the coating solution is higher than the related art. It is unnecessary to spray and dry the coating solution several times to stack coating layers. The present invention is suitable for continuously manufacturing a large amount of coated rice. The viscosity of the coating solution is not excessively high. Clogging in the flow of rice and the coating solution in the coated rice manufacturing apparatus and binding of rice can be lessened. The soluble dietary fibre and the insoluble dietary fibre can be taken in at high concentration at the same time. The effect for preventing a blood sugar level increase reducing action and constipation can be expected as a health supplement.

When the coating solution is prepared by using hot water at 40 to 80°C as a water temperature condition and being thermally insulated in this temperature range, setting a viscosity of 320 to 1480 cP is easy. When the mixture of one or more kinds of soluble dietary fibre, one or more kinds of insoluble dietary fibre and water are diluted so that the viscosity is in the range of 320 to 1480 cP, the viscosity of the coating solution can easily be made close to that of a breaded pork cutlet in a 24°C environment, castor oil in a 20°C environment, and honey or gum syrup at 21°C.

The insoluble dietary fibre preferably has a particle size of 10 to 20 µm. If it has a larger particle size it strongly tends to precipitate onto the bottom portion of the tank in the mixing and diluting operations, and uniform mixing of the coating solution becomes difficult. When the particle size is limited to 10 to 20 µm, a uniformly mixed coating solution can be prepared. The insoluble dietary fibre having a particle size limited to 10 to 20 µm is used so as to be coated onto polished rice. The particles of the insoluble dietary fibre are filled into the coated film. The number of particles separated and desorbed from the coated film is decreased, and adherence to the polished rice can be drastically improved. In appearance, the surface of the finished coated rice is smoothened (or glossy without unevenness), which improves the product value.

When the coating solution has the same viscosity as that of a breaded pork cutlet in a 24°C environment, castor oil in a 20°C environment, and honey or gum syrup in a 21°C environment, the soluble dietary fibre and the insoluble dietary fibre can be taken in at the same time. The coating solution, which can prevent a blood sugar level increase reducing action and constipation, can be manufactured as a health supplement.

In the apparatus aspect of the invention, the preparing tank and the supply tank have the same configuration and the same volume. The coating solution in an amount used for operation for half a day can be prepared by the respective tanks. The preparing tank at the upper stage and the supply tank at the lower stage are arranged in series. The coating solution for half a day is prepared in the preparation tank, poured into the supply tank at the lower stage, and stored. The following coating solution for half a day is prepared in the preparation tank. The coating solution for one day can thus be prepared. If it is insufficient, coating solution can be additionally prepared. A large amount of coated rice can be continuously manufactured. Enough coating solution for half a day is prepared, so the apparatus can easily cope with the change of each small lot due to the change of the type of rice and the change of the type of the coating solution (due to different types of soluble or insoluble dietary fibre, different mixing ratios in the water solution, and different viscosities).

For a better understanding of the invention, embodiments of it will now be described, by way of example, with reference to the accompanying drawings, in which:

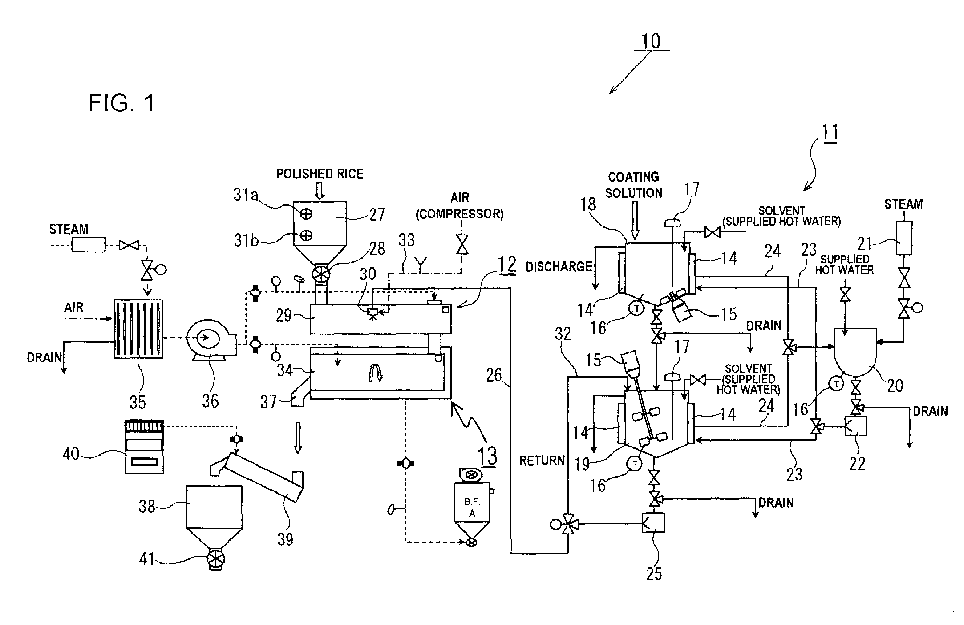

- Fig. 1: is a flowchart showing the outline of a coated rice manufacturing apparatus in accordance with the present invention.

As shown in Fig. 1, a coated rice manufacturing apparatus 10 has a coating solution preparing portion 11, a coating process portion 12, and a drying process portion 13.

The coating solution preparing portion 11 dissolves, mixes, and stirs a mixture of one or more soluble dietary fibres and one or more insoluble dietary fibres in a solvent (hot water) adjusted to an appropriate temperature and prepares a coating solution (aqueous solution) at a desired concentration and viscosity. The coating solution preparing portion 11 has a preparing tank 18 whose outside wall is covered by a thermal insulation jacket 14. The tank includes a stirrer 15, a water-temperature meter 16, and a water-level gauge 17 therein. Below the preparation tank 18 is a supply tank 19 having the same configuration as the preparing tank 18. Connected to both is a hot water reserve tank 20 which circulates hot water to the thermal insulation jackets 14, and steam supplying means 21 which heats water in the hot water reserve tank 20.

Both the preparation tank 18 and the supply tank 19 have a volume of 400 litres and, in this embodiment, can prepare the coating solution in an amount required for an operation for half a day. They are arranged in series. The coating solution for half a day is prepared by the preparation tank 18, poured into the supply tank 19 at the lower stage and stored. The following coating solution for half a day is prepared by the preparing tank 18, so that between the two tanks the coating solution for a full day can be prepared. The two tanks are arranged in series. If the coating solution being insufficient, coating solution can be prepared additionally. A large amount of coated rice can be continuously manufactured. Since the coating solution is prepared for half a day at a time, the system can easily cope with changes in successive batches due to the change of the type of rice and the change of the type of the coating solution.

The reference numeral 22 denotes a pump which circulates hot water from the hot water reserve tank 20 to each thermal insulation jacket 14. A hot water supply pipe 23 is disposed in a path from the hot water reserve tank 20 to each thermal insulation jacket 14. Hot water return pipes 24 are disposed in a path from the thermal insulation jackets 14 to the hot water reserve tank 20.

The reference numeral 25 denotes a pump which supplies the coating solution from the supply tank 19 to the coating solution process portion 12. A coating solution supply pipe 26 is disposed from the supply tank 19 to the adding and stirring portion of the coating solution process portion 12. A thermal insulating material may be wound on the coating solution supply pipe 26 so that the temperature of the coating solution passing therethrough does not drop.

The coating process portion 12 has a raw material tank 27 which primarily stores raw material rice, a rotary valve 28 which sets and controls the flow rate of the raw material rice, an adding and stirring portion 29 having a rotatable screw conveyor fitted in a laterally disposed cylinder, and a spray device 30 disposed in the cylinder of the adding and stirring portion 29. Upper and lower level sensors 31a and 31b are provided in the raw material tank 27 and enable the operation control of operation start and end. The rotary valve 28, the adding and stirring portion 29, and the spraying device 30 are in electrical communication with a controller (not shown), thereby enabling the control of the conveying speed of the adding and stirring portion 29 according to the flow rate set by the rotary valve 28 and the control of the added amount of the spraying device 30 according to the conveying speed of the adding and stirring portion 29, in order to prevent clogging of rice in the cylinder.

The spraying device 30 is connected to the coating solution supply pipe 26 sop as to communicate with the supply tank 19. A coating solution circulation path 32 returning to the supplying tank 19 is branched from a path from the pump 25 to the coating solution supply pipe 26. The spraying device 30 is connected to a pressurized air supply pipe 33 which supplies pressurized air from an air compressor and enables the coating solution supplied to the spraying device 30 to be a mist as a gas-liquid mixed flow by the pressurized air from the pressured air supply pipe 33. The coating solution will be described in detail later and is a water solution of a mixture of one or more kinds of soluble dietary fibre and one or more kinds of insoluble dietary fibre.

The drying process portion 13 has a drum body 34 which receives coating solution-added rice conveyed by the adding and stirring portion 29, into which hot air for drying is blown, and into which a rotor is fitted. A heater 35 which can adjust the temperature of a steam heat exchanger which blows hot air into the drum body 34 and a fan 36 which can adjust air quantity are disposed around the drum body 34. The rotor (not shown) fitted into the drum body 34 can be a ribbon screw having a screw vane having a shape so as to helically rotate a ribbon fitted to a rotational shaft, or a stirring bar or a stirring paddle having the function of raking up the rice on the bottom surface of the drum body 34, or a combination of these, for instance. The number of revolutions of the stirring member is controlled according to the rate of adding the coating solution by the spraying device 30, the output of the fan 36, and the temperature setting of the heater 35. A takeout gutter or discharge 37 which discharges the coated rice to the outside is provided on the conveying terminal side of the drum body 34.

An air-assisted screw conveyer 39 which conveys the coated rice to a product tank 38 is inclined near the takeout gutter 37. An air conditioner 40 for temperature and moisture adjustment, such as a dehumidification cooler, which blows cooling air into the conveyor 39, being disposed around it.

The product tank 38 temporarily stores the coated rice. A shutter 41 is provided in a discharge portion at the lower end and automatically opens or closes the rotary valve.

The operation of the manufacturing apparatus 10 will be described. Polished rice is fed to the raw material tank 27 by a feed charge lift. The polished rice, which is temporarily stored in the raw material tank 27, passes through the rotary valve 28 in the discharge portion at the lower end of the raw material tank, and is supplied to one end of the adding and stirring portion 29 constituting the coating process portion 12. The conveying speed, that is, the number of revolutions, of the screw conveyor of the adding and stirring portion 29 can be varied according to the flow rate set by the rotary valve 28.

The polished rice continuously supplied to the adding and stirring portion 29 at a predetermined flow rate is stirred and conveyed by the screw conveyer. The coating solution supplied from the supplying tank 19 by the pump 25 is mixed with pressurized air and is sprayed from the spraying device 30 to the polished rice being conveyed. The detailed ingredients and the mixing ratio of the coating solution will be described later. The coated rice discharged from the discharge portion of the adding and stirring portion 29 is received by the drum body 34 constituting the drying process portion 13. Hot air is blown into the drum body 34 by the fan 36. Any excessive moisture of the coating solution coated onto the surface of the rice (polished rice) is removed. The rotor fitted into the drum body 34 is rotated and moved to provide stirring. The coating solution uniformly adheres to the rice so that the surface of the rice can be smooth. In this embodiment, when the coated rice is manufactured at a rate of 250 kg per hour, the temperature of hot air is about 50°C and the air quantity is about 10 m³/min, which leads to a satisfactory result.

The coated and dried rice is taken via the takeout gutter 37 of the drum body 34 to the outside and is fed to the product tank 38 via the blowing screw conveyer 39. Cool air is blown into the screw conveyer 39 so that the rice is cooled while it is conveyed. Any excessive heat causing colour change and degradation of the rice (the amount of temperature rise roughly judged as being excessive) is removed. The coated rice is then fed to the product tank 38. In the present invention, a coating solution having a high viscosity of 100 cP or above (320 to 1480 cP) is used. Nevertheless, binding of rice scarcely occurs so that it is unnecessary to provide a lump-disintegrating device for loosening any lumps of rice, nor a vibrating broom. Only the blowing screw conveyer 39 is provided and the installation of a disintegrating device can be omitted. The rice temporarily reserved in the product tank 38 is taken out by driving the shutter 41, if necessary, and is shipped.

Various kinds of coated rice and a specific manufacturing method using the manufacturing apparatus 10 will be described. The coating solution which is coated onto the entire surface of polished rice is made of a water solution of a mixture of one or more kinds of soluble dietary fibre and one or more kinds of insoluble dietary fibre. As the specific soluble dietary fibre, resistant dextrin or a hydrolysate manufactured from rice starch is suitable for use. As the specific insoluble dietary fibre, cellulose, pectin, insoluble hemicellulose, lignin, and resistant starch are suitable.

The mixing ratio of the soluble dietary fibre and the insoluble dietary fibre is preferably one part by weight of soluble dietary fibre to 0.5 to 2 parts by weight of the insoluble dietary fibre. A mixture of these and water (preferably hot water) is stirred and mixed to prepare the coating solution. The dilution ratio of the mixture and the hot water is preferably 7 parts by weight of the mixture and 3 parts by weight of the water. The hot water is preferably at 40 to 80°C and is thermally insulated in this temperature range during preparation. The viscosity of the prepared coating solution is about 320 to 1480 cP and is the same as that of a breaded pork cutlet in a 24°C environment, castor oil in a 20°C environment, and honey or gum syrup in a 21°C environment. The viscosity of the coating solution is higher than previously, so that it does not need to be sprayed and dried many times to stack coating layers. The coating solution of the present invention is suitable for continuously manufacturing a large amount of coated rice.

Although the particle size of the soluble dietary fibre need not be limited, since it is easily soluble, the particle size of the insoluble dietary fibre needs be limited when the coating solution is prepared or is coated onto rice. When the insoluble dietary fibre having a large particle size is mixed in the preparation, the insoluble dietary fibre having a large particle size strongly tends to be precipitated onto the bottom of the tank during the preparing operation. Uniform mixing of the coating solution then becomes difficult. Although the mixture is strongly stirred so as to prepare the uniform coating solution, it is difficult to emulsify. The coating solution of the present invention, using insoluble dietary fibre having a particle size limited to 10 to 20 µm, enters a uniformly mixed state.

When the coating solution is added to polished rice and is dried and the insoluble dietary fibre has a large particle size, the number of particles separated and desorbed from the coated film formed on the surface of the polished rice increases. The coating solution of the invention is coated onto the polished rice using the insoluble dietary fibre having a particle size limited to 10 to 20 µm. The particles are filled into the coated film. The number of the particles separated and desorbed from the coated film decreases. The adherence yield to the polished rice can be drastically improved. In appearance, the surface of the finished coated rice is smoothened and the product value can be improved.

### Test example 1

As a comparative example, a water solution of only the soluble dietary fibre is diluted so as to be at a concentration of a 70 wt % to prepare the coating solution and it is examined whether or not the coating solution is appropriate as a coating solution for polished rice. As the soluble dietary fibre, the product known as "NUTRIOSE (registered trademark)" (manufactured by Roquette in France, and hereinafter called "NUTRIOSE"), which is commercially available soluble resistant dextrin, is used. Seven parts by weight of NUTRIOSE and three parts by weight of the water at 50°C are stirred and mixed to prepare the coating solution. The prepared coating solution is added at a ratio of 6.5% by weight to the polished rice to manufacture coated rice (Sample 1).

### Test example 2

A mixture of one or more kinds of soluble dietary fibre and one or more kinds of insoluble dietary fibre is diluted with water to prepare the coating solution, and it is examined whether or not the coating solution is appropriate as a coating solution for polished rice. As the soluble dietary fibre, NUTRIOSE is used. As the insoluble dietary fibre, the product known as "Fibre gym RW (registered trademark)" (manufactured by MGP Ingredients in the United States, and hereinafter called "Fibre gym"), which is resistant starch, is used. The mixing ratio is one part of NUTRIOSE and one part of Fibre gym. A mixture of these and hot water at 7 parts by weight of the mixture and 3 parts by weight of the water is prepared. The temperature of the hot water is 50°C. The mixture is thermally insulated and maintained at this temperature for preparation. The prepared coating solution is added at a ratio of 6.5% by weight to the polished rice to manufacture the coated rice (Sample 2). A coating solution prepared in the same manner is used and is added at a ratio of 8.0% by weight to the polished rice to manufacture the coated rice (Sample 3).

The test results of Test examples 1 and 2 are shown in the following Table 1.

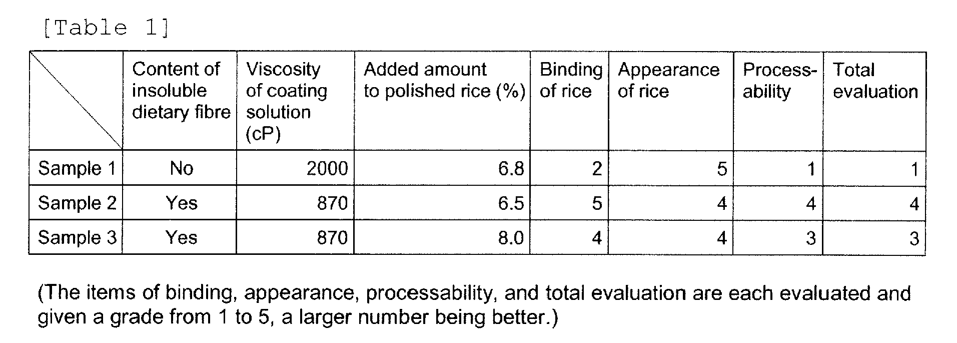

In Sample 1 of Table 1, the viscosity of the coating solution is about 2000 cP and is the same as that of condensed milk in a 21°C environment. The rice adheres to the rotary valve and the vane of the screw conveyer in the coated rice manufacturing apparatus 10. It is thought that the coating solution in Sample 1 is not suitable as a coating solution for polished rice.

In Samples 2 and 3 of Table 1, the viscosity of the coating solution is 870 cP, which is in the range of 320 to 1480 cP. The coating solution has moderate viscosity and adhesiveness to the rice. The adhesiveness of the coating solution to the metal material in the coated rice manufacturing apparatus 10 is low. The motor load of the pumps 22 and 25 becomes smaller. It is found that the coating solution is optimum as the coating solution for the polished rice and is suitable for continuously manufacturing the coated rice.

As described above, according to this embodiment, the prepared coating solution has the same viscosity as that of a breaded pork cutlet sauce in a 24°C environment, castor oil in a 20°C environment, and honey or gum syrup in a 21°C environment. The viscosity of the coating solution is higher than the related art. It is unnecessary to spray and dry the coating solution plural times to stack coating layers. The present invention is suitable for continuously manufacturing a large amount of coated rice. The viscosity of the coating solution is not excessively high. Clogging in the coated rice manufacturing apparatus and the binding of rice can be lessened. The soluble dietary fibre and the insoluble dietary fibre can be taken in at high concentration at the same time. The effect of a blood sugar level increase reducing action and constipation prophylaxis can be expected as a health benefit.

## Claims

1. A coating solution to be added to rice to manufacture coated rice, wherein the coating solution is made of a water solution of a mixture of one or more kinds of soluble dietary fibre and one or more kinds of insoluble dietary fibre, the ratio of soluble to insoluble dietary fibre being 0.5 to 2 parts by weight, and the dilution ratio being approximately 7 parts by weight of the mixture to 3 parts by weight of water.

2. A coating solution according to claim 1, wherein when the mixture is diluted with water, hot water at a temperature of 40 to 80°C is used.

3. A coating solution according to claim 1 or 2, wherein when the mixture is diluted with water, the viscosity is in the range of 320 to 1480 cP for preparation.

4. A coating solution according to any preceding claim, wherein, when the coating solution is prepared, the particle size of the insoluble dietary fibre is 10 to 20 µm.

5. A method for treating grains, by coating them with a solution according to any preceding claim.

6. A method for manufacturing a coating solution, comprising the steps of:
using a raw material made of a mixture of one or more kinds of soluble dietary fibre and one or more kinds of insoluble dietary fibre and hot water;
mixing one part by weight of the soluble dietary fibre and 0.5 to 2 parts by weight of the insoluble dietary fibre;
diluting the mixture with the hot water at 40 to 80°C at a ratio of approximately 7 parts by weight of the mixture to 3 parts by weight of the hot water; and
thermally insulating and stirring the diluted mixture at a predetermined temperature so as to produce a viscosity in the range of 320 to 1480 cP.

7. An apparatus (11) for manufacturing a coating solution in which a mixture of one or more kinds of soluble dietary fibre and one or more kinds of insoluble dietary fibre is diluted by hot water to prepare a coating solution, the apparatus comprising:
a preparation tank (18), a supply tank (19) and a temperature control system for the two tanks the preparation tank at the upstream stage and the supply tank at the downstream stage being arranged in series so that the coating solution prepared by the preparation tank (18) can be poured into the supply tank and stored.

8. An apparatus according to claim 7, wherein the supply tank (19) has the same configuration and the same volume as the preparation tank.

9. An apparatus according to claim 7 or 8, wherein the outside wall of each tank is covered by a thermal insulation jacket (14) and the tank includes a stirrer, and the temperature control system includes a hot-water tank (20) which circulates hot water in the thermal insulation jacket, and steam supply means (21) which heats water in the hot-water tank.

10. An apparatus for coating grains, comprising a solution apparatus according to any of claims 7 to 9 and a process part (12) in which the grains are coated by the solution.
